# FASCICULE DE BREVET EUROPEEN

(11) **EP 1 884 416 B1**
(45) Date de publication et mention de la délivrance du brevet: **10.08.2011**
(21) Numéro de dépôt: 07301125.6
(22) Date de dépôt: 18.06.2007
(51) Int. Cl.: B60R 19/12, B60R 19/18

(54) **Cadre de bloc avant de véhicule automobile**
Blockrahmen vor Kraftfahrzeugen
Frame for the front block of an automobile vehicle.

(30) Priorité: 01.08.2006 FR 0653235
(43) Date de publication de la demande: 06.02.2008
(73) Titulaire: PEUGEOT CITROËN AUTOMOBILES S.A., 78140 Vélizy Villacoublay (FR)
(72) Inventeur: Leclere, Guillaume, 91300 Massy (FR); Coulombier, Donat, 78280 Guyancourt (FR); Merlier, Tom, 75011 Paris (FR)

(56) Documents cités:
- EP-A2- 1 138 557
- WO-A-2006/111299
- JP-A- 2005 001 430
- US-A1- 2005 116 498
- US-A1- 2006 082 169

## Description

L'invention concerne un cadre destiné à être disposé à l'avant d'un véhicule automobile, du type comportant une poutre supérieure et une poutre inférieure, et des jambages assurant une liaison rigide entre les deux poutres.

En matière de protection passive en cas de choc frontal, la majorité des conceptions des blocs avant des véhicules actuels repose sur une voie d'effort principale nommée longeron ou brancard. Certains véhicules disposent depuis peu de prolonges de berceau qui constituent une nouvelle voie d'effort inférieure.

L'examen des collisions entre deux véhicules révèle bien souvent que ces voies d'effort ont du mal à interagir entre elles, du fait de surfaces d'appui soit inexistantes, soit insuffisantes ou encore pas assez rigides pour parvenir à transmettre les efforts à l'ensemble des éléments de structure. Il en résulte une sous-exploitation des blocs avant par rapport au potentiel d'absorption disponible, certains organes restant non sollicités lors du choc.

Le document FR-A-2 829 733 décrit un système visant à améliorer l'absorption d'énergie de la face avant du véhicule. Cependant, la déformation importante de tels systèmes lors du choc, liée à la fonction même d'absorption d'énergie, conduit quasi-systématiquement à une ruine partielle ou totale de ces systèmes, qui deviennent alors complètement inopérants pour transmettre les efforts au reste de la structure.

En outre, le document US 2006/0082169 A1 décrit un bloc avant de véhicule selon le préambule de la revendication 1.

L'invention a pour but de proposer un dispositif permettant de transmettre les efforts à l'ensemble des éléments de structure sans déformation excessive ni rupture et d'améliorer ainsi le comportement en cas de choc véhicule/véhicule.

A cet effet, l'invention a pour objet un bloc avant destiné à être disposé à l'avant d'un véhicule automobile, du type précité, comprenant les caractéristiques techniques décrites dans la partie caractérisante de la revendication 1.

Suivant d'autres caractéristiques :
- au moins une plaque d'appui chevauche au moins un jambage ;
- la largeur totale des plaques d'appui est comprise entre 8 et 25% de la largeur des poutres ;
- les poutres ont des sections transversales fermées sur au moins une partie de la longueur des poutres ;
- les poutres sont des profilés, notamment en aluminium ou en alliage d'aluminium ;
- au moins une poutre comporte une cloison interne ;
- la section transversale de la cloison interne est orientée longitudinalement ;
- les jambages sont en appui simple sur la paroi horizontale inférieure de la poutre supérieure et/ou sur la paroi horizontale supérieure de la poutre inférieure, et sont assemblés auxdites poutres par des cordons de soudure ; et
- les jambages comportent des extrémités insérées à travers des ouvertures pratiquées dans la paroi horizontale inférieure de la poutre supérieure et/ou dans la paroi horizontale supérieure de la poutre inférieure, et sont assemblés auxdites poutres par des cordons de soudure.

L'invention a également pour objet un véhicule automobile, caractérisé en ce qu'il comprend un cadre tel que décrit précédemment, fixé à l'extrémité avant d'éléments de structure longitudinaux du véhicule.

L'invention sera mieux comprise à la lecture de la description qui va suivre, donné uniquement à titre d'exemple et faite en se référant aux dessins annexés, sur lesquels :
- la Figure 1 est une vue simplifiée en perspective d'un bloc avant de véhicule automobile selon l'invention ;
- la Figure 2 est une vue en perspective de l'avant du cadre de la Figure 1 ;
- la Figure 3 est une vue arrière du cadre de la Figure 1 ; et
- la Figure 4 est une vue en perspective de l'arrière du cadre de la Figure 1 montrant l'assemblage des jambages sur les poutres.

Dans tout ce qui suit, les orientations telles que « avant », « arrière », « longitudinal », « transversal », correspondent à celles du véhicule.

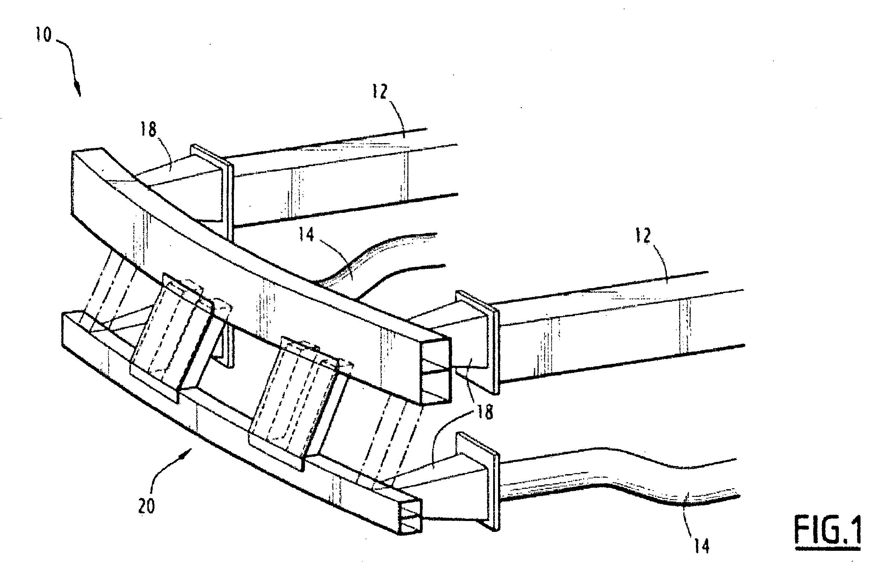

La Figure 1 représente, de façon simplifiée, un bloc avant 10 de véhicule automobile (non représenté).

Le bloc avant 10 comprend une voie d'effort principale, ou voie haute, constituée par deux longerons 12, et une voie d'effort inférieure, ou voie basse, constituée par deux prolonges 14 de berceau moteur.

Le bloc avant 10 comprend en outre divers éléments fonctionnels, dont un groupe moto-ventilateur, non représentés.

Le bloc avant 10 comprend également des absorbeurs réparabilité 18 et un cadre avant 20 très rigide qui est implanté à l'arrière du pare-chocs avant (non représenté) du véhicule.

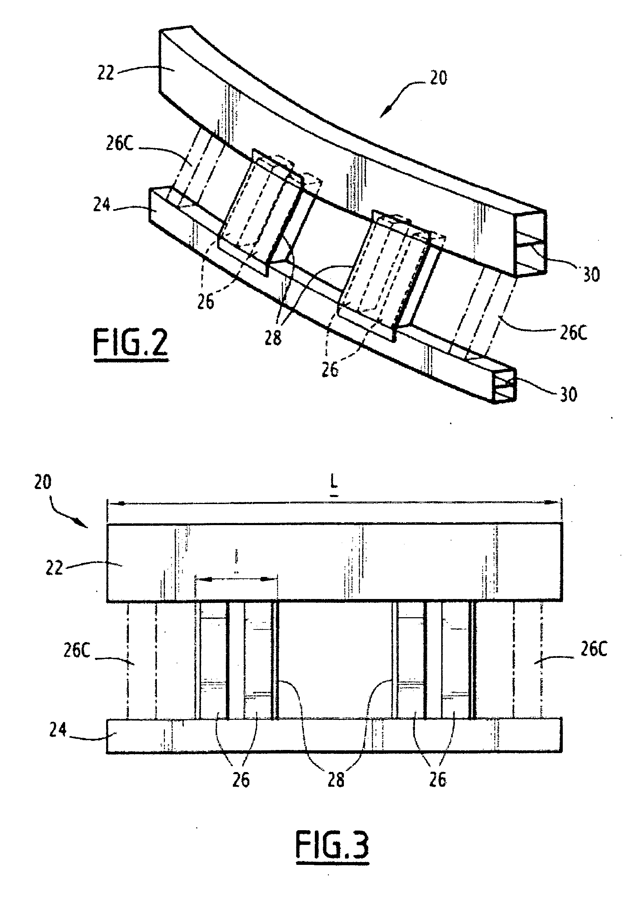

En référence à la Figure 2, le cadre 20 comprend une poutre supérieure 22, une poutre inférieure 24, les deux poutres 22 et 24 étant horizontales, et des jambages 26 à peu près verticaux qui assurent une liaison rigide entre les deux poutres 22 et 24. Dans cet exemple, les jambages sont légèrement inclinés dans le sens avant-arrière.

Le cadre 20 comprend également deux plaques d'appui 28 soudées sur les deux poutres 22 et 24 dans le but d'augmenter la surface d'appui et la rigidité du dispositif.

Les deux poutres 22 et 24 et les jambages 26 sont des profilés en aluminium ayant une section transversale fermée, ce qui permet d'obtenir une rigidité maximale au cours d'un choc frontal, donc de limiter les déformations et par conséquent les risques de ruine ou de rupture.

Chaque poutre est munie sur toute sa longueur d'une cloison interne 30 horizontale et orientée longitudinalement.

Comme on le voit mieux sur la Figure 3, le cadre 20 comporte quatre jambages 26, et les deux plaques d'appui 28 chevauchent chacune deux jambages 26.

Plus les plaques d'appui sont de surface importante, meilleure sera l'interaction avec un obstacle. De préférence, la largeur I d'une plaque d'appui 28 est comprise entre 8 et 25% de la largeur L des poutres 22 et 24. Dans cet exemple, chaque plaque d'appui a une largeur de 150 mm environ.

Le cadre peut être réalisé en acier ou en aluminium. Le recours à l'aluminium reste cependant plus avantageux en terme de masse. A titre indicatif, on peut choisir les paramètres suivants :
- poutre supérieure : profilé en aluminium fermé avec cloison interne. Epaisseur de la cloison : 2 mm. Epaisseur des parois externes : 3 mm ;
- poutre inférieure : profilé en aluminium fermé avec cloison interne. L'ensemble des parois a une épaisseur de 2 mm ;
- jambages verticaux : profilé en aluminium fermé de section carrée et d'épaisseur de 2 mm ;
- plaques d'appui : en aluminium d'épaisseur de 2 mm.

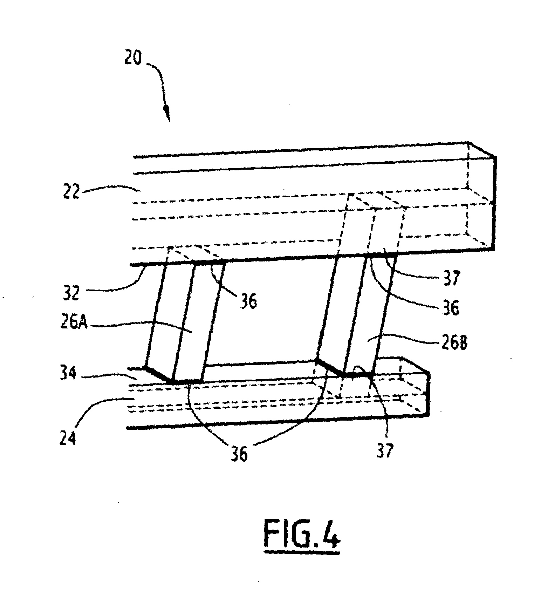

La Figure 4 représente deux façons différentes pour assembler les jambages 26 aux poutres 22 et 24.

Le jambage 26A est en appui simple sur la paroi horizontale inférieure 32 de la poutre supérieure 22 et sur la paroi horizontale supérieure 34 de la poutre inférieure 24. Le jambage 26A est alors assemblé aux poutres 22 et 24 par des cordons de soudure 36.

Le jambage 26B est inséré par ses extrémités à travers des ouvertures conjuguées 37 pratiquées dans la paroi horizontale inférieure 32 et dans la paroi horizontale supérieure 34. Le jambage 26B est alors assemblé aux poutres 22 et 24 par des cordons de soudure 36 le long du pourtour des ouvertures 37.

L'assemblage du jambage 26B aux poutres 22 et 24 est donc moins sensible au risque de rupture des cordons de soudure 36 lors du choc.

En variante, il est également possible d'assembler les différents éléments 22 à 28 par vissage.

Le nombre et la position des jambages 26 et des plaques d'appui 28 dépendent de la rigidité recherchée et des contraintes liées à l'environnement du véhicule telles que les entrées d'air, le style du pare-chocs avant ou encore l'implantation de projecteurs anti-brouillard.

Il est ainsi possible d'ajouter des jambages en partie latérale des poutres 22 et 24, comme l'indiquent les jambages 26C en pointillés sur les Figures 2 et 3, et/ou en partie centrale.

En variante également, les jambages peuvent être inclinés dans le sens transversal.

La position en hauteur des poutres 22 et 24 peut également varier.

Dans le mode de réalisation de la présente invention, les poutres 22 et 24 sont situées à la même altitude que les absorbeurs réparabilité 18 situés derrière, mais il est possible de les décaler.

Le cadre selon l'invention permet donc de créer une interface rigide qui, lors d'un choc frontal, permet de capter les efforts issus du choc et de les redistribuer à l'ensemble des éléments de structure de manière optimale.

## Revendications

1. Bloc avant (10) de véhicule, notamment de véhicule automobile, comprenant une voie d'effort principale (12), une voie d'effort inférieure (14), un cadre (20) et des absorbeurs (18), le cadre (20) comprenant une poutre supérieure (22) et une poutre inférieure (24) sensiblement horizontales, et des jambages (26) assurant une liaison rigide entre les deux poutres (22, 24), chaque poutre (22, 24) étant liée à une voie d'effort (12, 14) par un absorbeur (18), **caractérisé en ce que** le cadre (20) comprend également au moins une plaque d'appui (28) fixée rigidement sur les deux poutres (22, 24), notamment par soudage, chaque plaque d'appui (28) s'étendant dans un plan transversal sensiblement perpendiculaire à un axe longitudinal au bloc avant (10) afin d'en augmenter la surface d'appui avec un obstacle extérieur lors d'un choc.

2. Bloc avant (10) de véhicule selon la revendication 1, **caractérisé en ce qu'**au moins une plaque d'appui (28) chevauche au moins un jambage (26) du cadre (10).

3. Bloc avant (10) de véhicule selon la revendication 1 ou 2, **caractérisé en ce que** la largeur totale des plaques d'appui (28) est comprise entre 8 et 25% de la largeur des poutres (22, 24).

4. Bloc avant (10) de véhicule selon l'une quelconque des revendications 1 à 3, **caractérisé en ce que** les poutres (22, 24) ont des sections transversales fermées sur au moins une partie de la longueur des poutres (22, 24).

5. Bloc avant (10) de véhicule selon l'une quelconque des revendications 1 à 4, **caractérisé en ce que** les poutres (22, 24) sont des profilés, notamment en aluminium ou en alliage d'aluminium.

6. Bloc avant (10) de véhicule selon l'une quelconque des revendications 1 à 5, **caractérisé en ce qu'**au moins une poutre (22) comporte une cloison interne (30).

7. Bloc avant (10) de véhicule selon la revendication 6, **caractérisé en ce que** la section transversale de la cloison interne (30) est orientée longitudinalement.

8. Bloc avant (10) de véhicule selon l'une quelconque des revendications 1 à 7, **caractérisé en ce que** les jambages (26) sont en appui simple sur la paroi horizontale inférieure (32) de la poutre supérieure (22) et/ou sur la paroi horizontale supérieure (34) de la poutre inférieure (24), et sont assemblés auxdites poutres (22, 24) par des cordons de soudure (36).

9. Bloc avant (10) de véhicule selon l'une quelconque des revendications 1 à 7, **caractérisé en ce que** les jambages (26) comportent des extrémités insérées à travers des ouvertures (37) pratiquées dans la paroi horizontale inférieure (32) de la poutre supérieure (22) et/ou dans la paroi horizontale supérieure (34) de la poutre inférieure (24), et sont assemblés auxdites poutres (22, 24) par des cordons de soudure (36).

## Claims

1. Front end (10) of a vehicle, in particular of a motor vehicle, comprising a principal stress path (12), a secondary stress path (14), a frame (20) and absorbers (18), the frame (20) comprising an upper beam (22) and a lower beam (24) which are substantially horizontal, and legs (26) ensuring a rigid connection between the two beams (22, 24), each beam (22, 24) being connected to a stress path (12, 14) by an absorber (18), **characterized in that** the frame (20) also comprises at least one support plate (28) fixed rigidly on the two beams (22, 24), in particular by welding, each support plate (28) extending in a transverse plane substantially perpendicular to a longitudinal axis to the front end (10) so as to increase the support surface thereof with an exterior obstacle in the case of an impact.

2. Front end (10) of a vehicle according to Claim 1, **characterized in that** at least one support plate (28) spans at least one leg (26) of the frame (10).

3. Front end (10) of a vehicle according to Claim 1 or 2, **characterized in that** the total width of the support plates (28) is comprised between 8 and 25% of the width of the beams (22, 24).

4. Front end (10) of a vehicle according to any one of Claims 1 to 3, **characterized in that** the beams (22, 24) have closed transverse sections on at least a portion of the length of the beams (22, 24).

5. Front end (10) of a vehicle according to any one of Claims 1 to 4, **characterized in that** the beams (22, 24) are sections, in particular of aluminium or of aluminium alloy.

6. Front end (10) of a vehicle according to any one of Claims 1 to 5, **characterized in that** at least one beam (22) comprises an internal partition (30).

7. Front end (10) of a vehicle according to Claim 6, **characterized in that** the transverse section of the internal partition (30) is oriented longitudinally.

8. Front end (10) of a vehicle according to any one of Claims 1 to 7, **characterized in that** the legs (26) rest simply on the lower horizontal wall (32) of the upper beam (22) and/or on the upper horizontal wall (34) of the lower beam (24), and are assembled to the said beams (22, 24) by weld beads (36).

9. Front end (10) of a vehicle according to any one of Claims 1 to 7, **characterized in that** the legs (26) comprise ends inserted through openings (37) formed in the lower horizontal wall (32) of the upper beam (22) and/or in the upper horizontal wall (34) of the lower beam (24), and are assembled to the said beams (22, 24) by weld beads (36).

## Patentansprüche

1. Vorderer Fahrzeugblock (10), insbesondere eines Kraftfahrzeugs, der einen Hauptkraftverlauf (12), einen unteren Kraftverlauf (14), einen Rahmen (20) und Stoßaufnehmer (18) aufweist, wobei der Rahmen (20) einen oberen Balken (22) und einen unteren Balken (24) aufweist, die im Wesentlichen horizontal sind, und Ständer (26), die eine starre Verbindung zwischen den zwei Balken (22, 24) sicherstellen, wobei jeder Balken (22, 24) mit einem Kraftverlauf (12, 14) durch einen Stoßaufnehmer (18) verbunden ist, **dadurch gekennzeichnet, dass** der Rahmen (20) auch mindestens eine Auflageplatte (28) aufweist, die starr auf den zwei Balken (22, 24) insbesondere durch Schweißen befestigt ist, wobei sich jede Auflageplatte (28) in einer Querebene erstreckt, die im Wesentlichen zu einer Längsachse am vorderen Block (10) senkrecht ist, um die Auflagefläche mit einem äußeren Hindernis bei einem Zusammenprall zu erhöhen.

2. Vorderer Fahrzeugblock (10) nach Anspruch 1, **dadurch gekennzeichnet, dass** die mindestens eine Auflageplatte (28) mindestens einen Ständer (26) des Rahmens (10) überdeckt.

3. Vorderer Fahrzeugblock (10) nach Anspruch 1 oder 2, **dadurch gekennzeichnet, dass** die gesamte Breite der Auflageplatte (28) zwischen 8 % und 25 % der Breite der Balken (22, 24) beträgt.

4. Vorderer Fahrzeugblock (10) nach einem der Ansprüche 1 bis 3, **dadurch gekennzeichnet, dass** die Balken (22, 24) auf mindestens einem Teil der Länge der Balken (22, 24) geschlossene Querschnitte haben.

5. Vorderer Fahrzeugblock (10) nach einem der Ansprüche 1 bis 4, **dadurch gekennzeichnet, dass** die Balken (22, 24) Profile sind, insbesondere aus Aluminium oder aus Aluminiumslegierungen.

6. Vorderer Fahrzeugblock (10) nach einem der Ansprüche 1 bis 5, **dadurch gekennzeichnet, dass** mindestens ein Balken (22) eine Innenwand (30) aufweist.

7. Vorderer Fahrzeugblock (10) nach Anspruch 6, **dadurch gekennzeichnet, dass** der Querschnitt der Innenwand (30) längs ausgerichtet ist.

8. Vorderer Fahrzeugblock (10) nach einem der Ansprüche 1 bis 7, **dadurch gekennzeichnet, dass** die Ständer (26) einfach auf der unteren horizontalen Wand (32) des oberen Balkens (22) und/oder auf der oberen horizontalen Wand (34) des unteren Balkens (24) aufliegen und mit den Balken (22, 24) durch Schweißnähte (36) zusammengefügt sind.

9. Vorderer Fahrzeugblock (10) nach einem der Ansprüche 1 bis 7, **dadurch gekennzeichnet, dass** die Ständer (26) Enden aufweisen, die durch Öffnungen (37), die in der unteren horizontalen Wand (32) des oberen Balkens (22) und/oder in der oberen horizontalen Wand (34) des unteren Balkens (24) angelegt sind, eingesetzt und mit den Balken (22, 24) durch Schweißnähte (36) zusammengefügt sind.
